# EUROPÄISCHE PATENTSCHRIFT

(11) **EP 2 411 638 B1**
(45) Veröffentlichungstag und Bekanntmachung des Hinweises auf die Patenterteilung: **24.09.2014**
(21) Anmeldenummer: 10705388.6
(22) Anmeldetag: 26.02.2010
(51) Int. Cl.: F01N 3/28, B01J 35/04

(54) **WABENKÖRPER FÜR EIN ABGASREINIGUNGSSYSTEM**
HONEYCOMB BODY FOR AN EXHAUST GAS PURIFICATION SYSTEM
CORPS EN NID-D'ABEILLES POUR SYSTÈME D'ÉPURATION DE GAZ D'ÉCHAPPEMENT

(30) Priorität: 27.03.2009 DE 102009015420
(43) Veröffentlichungstag der Anmeldung: 01.02.2012
(73) Patentinhaber: Emitec Gesellschaft für Emissionstechnologie mbH, 53797 Lohmar (DE)
(72) Erfinder: WIERES, Ludwig, 51491 Overath (DE); BRÜCK, Rolf, 51429 Bergisch Gladbach (DE); KOTTHOFF, Hubertus, 53809 Ruppichteroth (DE)
(74) Vertreter: Rössler, Matthias
(86) Internationale Anmeldenummer: PCT/EP2010/052465
(87) Internationale Veröffentlichungsnummer: WO 2010/108755

(56) Entgegenhaltungen:
- WO-A1-2008/096852
- WO-A2-02/46093
- AT-U1- 6 726
- US-B1- 6 713 025

## Beschreibung

Die Erfindung betrifft einen Wabenkörper für ein Abgasreinigungssystem sowie ein Verfahren zu dessen Herstellung bzw. Integration in ein Abgasreinigungssystem.

Derartige Wabenkörper können beispielsweise als Trägerkörper für katalytisch wirkende Beschichtungen und/oder als Filter, Adsorber, Mischer im Abgassystem einer Verbrennungskraftmaschine eingesetzt werden. Es sind (lagenweise aufgebaute) metallische und (extrudierte) keramische Wabenkörper für diesen Einsatzzweck bekannt. Zur Abgasreinigung eingesetzte Wabenkörper zeichnen sich regelmäßig dadurch aus, dass sie eine Anströmseite aufweisen, auf welche die Abgase treffen, die von einer Verbrennungskraftmaschine ausgestoßen werden. An die Anströmseite anschließend erstrecken sich Kanäle des Wabenkörpers bis hin zu einer Abströmseite, an der die Abgase den Wabenkörper wieder verlassen. Die Kanäle des Wabenkörpers weisen regelmäßig Wände auf, mit welchen das Abgas beim Durchströmen in Kontakt kommt. Das Eintreten der Abgasströmung in den Wabenkörper beeinflusst die Verteilung des Abgases in die einzelnen Kanäle des Wabenkörpers maßgeblich. Je nachdem, wie die Anströmseite des Wabenkörpers gestaltet ist, stellt sich eine bestimmte Verteilung des Abgases in die einzelnen Kanäle ein. Im Stand der Technik wurden bereits unterschiedliche Ausgestaltungen der Anströmseite von Wabenkörpern vorgeschlagen, z. B. teleskopierte oder zerklüftete Anströmseiten, bei denen die einzelnen Wände zwischen den Kanälen unterschiedlich weit hervorstehen.

Die Gestaltung der Anströmfläche eines Wabenkörpers hat auch einen Einfluss auf den Strömungswiderstand des Wabenkörpers, weil sich vor dem Wabenkörper regelmäßig ein Druckpolster ausbildet, welches durch die Gestaltung der Anströmfläche beeinflusst werden kann. Nicht nur die Anströmseite des Wabenkörpers beeinflusst den Strömungswiderstand des Wabenkörpers. Auch an der Abströmseite am Ende der Kanäle kann durch eine geeignete Gestaltung der Strömungswiderstand des Wabenkörpers und die Verteilung der Abgasströmung hinter dem Wabenkörper beeinflusst werden.

Da vielfach eine an das Strömungsverhalten des Abgases oder anderer Zusatzstoffe angepasste Lagerung der Wabenkörper in der Abgasleitung gewünscht ist, besteht auch das Problem, wie dies im Rahmen einer Serienfertigung mit hoher Genauigkeit und geringem technischen Aufwand realisiert werden kann.

Die WO 2008/096852 A1 offenbart einen keramischen Wabenkörper mit einer planen schrägen Stirnfläche.

Hiervon ausgehend ist es Aufgabe der hier vorliegenden Erfindung, die im Zusammenhang mit dem Stand der Technik geschilderten technischen Probleme zu lindern. Es soll insbesondere ein besonders vorteilhafter Wabenkörper angegeben werden, der sich durch eine für die Abgasströmung besonders vorteilhaft gestaltete An- bzw. Abströmseite auszeichnet. Darüber hinaus soll ein Verfahren zur Herstellung eines solchen Wabenkörpers angegeben werden.

Diese Aufgaben werden gelöst mit einem Wabenkörper gemäß den Merkmalen des Patentanspruchs 1 sowie einem Verfahren zur Herstellung eines Wabenkörpers gemäß den Merkmalen des Patentanspruchs 7. Weitere vorteilhafte Ausgestaltungen des Wabenkörpers sind in den jeweils abhängig formulierten Patentansprüchen angegeben. Die in den Patentansprüchen einzelnen aufgeführten Merkmale sind in beliebiger, technologisch sinnvoller, Weise miteinander kombinierbar und können durch erläuternde Sachverhalte insbesondere im Zusammenhang mit den Figuren ergänzt werden, wobei weitere Ausführungsvarianten der Erfindung aufgezeigt werden.

Der erfindungsgemäße Wabenkörper hat Kanäle, eine axiale Hauptrichtung, eine plane Frontfläche, eine plane Endfläche und eine Umfangsfläche, welche parallel zur axialen Hauptrichtung angeordnet ist, wobei zumindest die Frontfläche oder die Endfläche schräg zur axialen Hauptrichtung angeordnet ist.

Der Wabenkörper ist bevorzugt mit einer Vielzahl von Kanälen ausgeführt, wobei diese gegebenenfalls im Wesentlichen parallel zueinander und/oder im Wesentlichen parallel zur axialen Hauptrichtung verlaufen. Die Frontfläche bzw. Endfläche wird insbesondere dann als "planar" angesehen, wenn sie praktisch vollständig in einer Ebene liegen und insbesondere im Wesentlichen sämtliche Kanäle und die die Kanäle begrenzenden Wände (im Rahmen üblicher Fertigungstoleranzen) vollständig in einer gemeinsamen, planaren Frontfläche bzw. Endfläche enden. Mit "schräg" ist hier insbesondere gemeint, dass die Fronfläche und/oder die Endfläche in einem Winkel zu einer normal zur axialen Hauptrichtung angeordneten Querschnittsfläche des Wabenkörpers angeordnet sind. Dieser Winkel kann beispielsweise zwischen 30° und 60°, bevorzugt ca. 45°, betragen. Wenn ein derartiger Wabenkörper in einem Abgassystem angeordnet ist und eine Abgasströmung auf eine solche schräg gestellte End- oder Frontfläche des Wabenkörpers trifft, gelangt ein Teil der Abgase bereits früher in die Kanäle des Wabenkörpers, weil einige Kanäle aufgrund der Schräge der End- bzw. Frontfläche in Strömungsrichtung des Abgases weiter vorne beginnen. Es hat sich gezeigt, dass eine derart angeströmte Fläche eines Wabenkörpers für die Strömung in einem Abgassystem vorteilhaft sein kann.

Derartige Wabenkörper können beispielsweise als Katalysatorträgerkörper, Filter, Adsorber, Mischer ausgeführt sein und in einem Abgassystem eingesetzt werden.

Der erfindungsgemäße Wabenkörper ist mit mindestens zwei Wabenkörpersegmenten ausgeführt ist, die jeweils mindestens eine plane und zur axialen Hauptrichtung normale Stirnfläche aufweisen und diese normalen Stirnflächen der mindestens zwei Wabenkörpersegmente zueinander gegenüberliegend angeordnet sind. Diese Wabenkörpersegmente bilden bevorzugt auch die (gemeinsame) Umfangsfläche des Wabenkörpers. Vorteilhaft ist deshalb, dass die Umfangsflächen beider Wabenkörpersegmente fluchtend zueinander angeordnet sind und gemeinsam die Umfangsfläche des gesamten Wabenkörpers bilden. Die plane Frontfläche und die plane Endfläche des Wabenkörpers werden dabei mit verschiedenen Wabenkörpersegmenten gebildet, so dass z. B. ein erstes Wabenkörpersegment mit einer Stirnfläche die plane und schräge Frontfläche und ein zweites Wabenkörpersegment mit einer Stirnfläche die plane und schräge Endfläche bilden. Die jeweiligen zur axialen Hauptrichtung normalen (senkrechten) Stirnflächen sind dann zwischen der plane Frontfläche und die plane Endfläche des Wabenkörpers (z. B. mit einem (geringen) Spalt zueinander oder direkt aneinander anschließend) angeordnet.

Die beiden Wabenkörpersegmente, aus denen der erfindungsgemäße Wabenkörper zusammengesetzt ist, können unterschiedliche Aufgaben in einem Abgassystem übernehmen. Es ist beispielsweise möglich, dass Wabenkörpersegmente mit unterschiedlichen Arten Metalllagen, wie beispielsweise Metallfolien und/oder metallischen Vliesen, an ihren Stirnflächen zueinander (berührend) angeordnet sind. Die einzelnen Wabenkörpersegmente können durch eine Verbindung miteinander verbunden werden. Hier ist insbesondere eine Schweiß- oder eine Lötverbindung möglich. Typischerweise weisen erfindungsgemäße Wabenkörper ein Gehäuse auf, das sich entlang der Umfangsfläche des Wabenkörpers erstreckt. Dieses Gehäuse hat häufig eine Dicke, die wesentlich größer ist als die Dicke der Metalllagen, welche die Wabenstruktur des Wabenkörpers bilden. Auch die einzelnen Wabenkörpersegmente weisen ein entsprechendes Gehäuseteil auf. Gerade diese Gehäuseteile eignen sich aufgrund ihrer Dicke besonders zur Ausbildung einer stoffschlüssigen Verbindung der Wabenkörpersegmente miteinander. Der Aufbau eines erfindungsgemäßen Wabenkörpers aus mindestens zwei Wabenkörpersegmenten ist deswegen vorteilhaft, weil so die Herstellung von Wabenkörpern mit schrägen Frontflächen und/oder Endflächen mit üblichen Herstellungsverfahren (Wickeln, Stapeln und/öder Winden von Metalllagenstapeln) sehr einfach wird, so dass sämtliche Metalllagen in einer planen, schrägen Front- oder Endflächen enden.

Besonders vorteilhaft ist ein derartiger Wabenkörper, wenn er mindestens eine zumindest teilweise gewellte Metalllage aufweist, welche die Kanäle begrenzende Kanalwände bildet. Als Metalllage kommen insbesondere (vollständig oder teilweise) gewellte und/oder glatte Metallfolien in Betracht. Darüber hinaus ist alternativ oder kumulativ auch der Einsatz von metallischen Vliesen (Gewebe, Gewirk, Gewirr aus Feinstdrähten) oder Metallfasermatten möglich. Wabenkörper aus Metalllagen zeichnen sich durch im Vergleich zu dem Kanalquerschnitt dünne Kanalwände aus. Derartige dünne Wände stellen einen geringeren Strömungswiderstand dar. Darüber hinaus sind metallische Wabenkörper sehr langlebig. Typischerweise werden zur Herstellung derartiger metallischer Wabenkörper mehrere glatte und gewellte Metalllagen als Stapel aufeinander angeordnet. Insbesondere die glatte Metalllage kann hierbei ein metallisches Vlies sein. Die als Stapel übereinander angeordneten Metalllagen werden dann zu einer Wabenstruktur gewickelt, gewunden oder gestapelt. An den Berührpunkten der Metalllagen miteinander sind an gewünschten Stellen Löt- oder Schweißverbindungen ausgeführt. Dabei ist es möglich, dass nicht alle derartigen Berührpunkte mit Löt- oder Schweißverbindungen ausgeführt sind.

Auch erfindungsgemäß ist ein solcher Wabenkörper, wenn die mindestens zwei Wabenkörpersegmente jeweils Kanäle und Kanalwände aufweisen und die Kanäle der mindestens zwei Wabenkörpersegmente entlang der axialen Hauptrichtung fluchtend zueinander angeordnet sind. Mit einer "fluchtenden" Anordnung der Kanäle der zwei Wabenkörpersegmente entlang der axialen Hauptrichtung ist hier insbesondere gemeint, dass sich die Kanäle typischerweise von einem (in Strömungsrichtung des Abgases) im Wabenkörper als erstes angeordnetes Wabenkörpersegment (ohne wesentliche) Unterbrechung hinüber in das (in Strömungsrichtung des Abgases) danach angeordnete Wabenkörpersegment erstrecken. "Fluchtend" bedeutet dabei auch eine ausgerichtete, gegenüberliegende und/oder ineinander übergehende Anordnung der Kanäle. Eine solche fluchtende Anordnung ist vorteilhaft, weil hierdurch innere Verwirbelungszonen für das Abgas im Wabenkörper selbst vermieden werden. Insbesondere ist es vorteilhaft, wenn im Rahmen von üblichen Fertigungstoleranzen alle Kanäle und insbesondere auch die vorzugsweise aus Metalllagen gebildeten Kanalwände, welche die einzelnen Kanäle gegeneinander abgrenzen, in beiden Wabenkörpersegmenten zueinander entlang der axialen Hauptrichtung fluchtend angeordnet sind. Eine derartige Anordnung erfordert eine hohe Präzision bei der Herstellung der beiden Wabenkörpersegmente, insbesondere dann, wenn es sich um metallische Wabenkörper handelt, welche gewickelt, gewunden oder gestapelt sind. Für eine derartige Anordnung ist die genaue Übereinstimmung der Kanalanordnungen im Querschnitt der beiden Wabenkörpersegmente erforderlich und diese Übereinstimmung ist mit einer entsprechend hohen Präzision während der Fertigung der Wabenkörpersegmente erreichbar.

Alternativ, oder für den Fall, dass mehr als zwei Wabenkörpersegmente zum Einsatz kommen, ist es auch möglich, gerade bewusst einen Versatz zwischen den Kanälen der beiden Wabenkörpersegmente vorzusehen. Ein solcher Versatz kann eine Verwirbelung und/oder Umlenkzone für Abgase beim Übergang aus dem in Strömungsrichtung zuerst angeordneten Wabenkörpersegment in das in Strömungsrichtung des Abgases danach angeordnete Wabenkörpersegment erzeugen. Insbesondere wenn die Wabenkörpersegmente im Abgassystem unterschiedliche Funktionen (Katalysatorträgerkörper, Filter, Adsorber und/oder Mischer) haben, kann es vorteilhaft sein, hier einen solchen Versatz vorzusehen.

Darüber hinaus ist es möglich, die einzelnen Wabenkörpersegmente auch an zur axialen Hauptrichtung nicht-normalen, insbesondere schrägen, Stirnflächen zu einem erfindungsgemäßen Wabenkörper zusammenzusetzen.

Vorteilhaft ist weiter auch, wenn der Wabenkörper parallel zur axialen Hauptrichtung eine längste axiale Ausdehnung und eine kürzestes axiale Ausdehnung aufweist, wobei die längste axiale Ausdehnung wesentlich länger ist als die kürzestes axiale Ausdehnung. Der Unterschied in der axialen Ausdehnung des Wabenkörpers ergibt sich insbesondere aufgrund der Ausgestaltung mit nur einer (1) schrägen Frontfläche oder mit nur einer (1) schrägen Endfläche. Besonders vorteilhaft ist es hier auch, wenn die längste axiale Ausdehnung des Wabenkörpers mindestens 5-mal, und insbesondere mindestens 10-mal, so lang ist wie die kürzeste axiale Ausdehnung. Eine derartige Ausgestaltung des Wabenkörpers führt dazu, dass ein Teil der Kanäle des Wabenkörpers, insbesondere die Kanäle im Bereich der kürzesten axialen Ausdehnung, einen deutlich geringeren Strömungswiderstand für die Abgasströmung darstellen als andere Kanäle. Die Kanäle im Bereich der längsten Ausdehnung des Wabenkörpers weisen regelmäßig den höchsten Strömungswiderstand auf. Durch eine solche Verteilung der Kanallängen wird die Strömungsverteilung des Abgases im Wabenkörper und auch in der vor und hinter dem Wabenkörper angeordneten Abgasleitung beeinflusst. Somit kann ein derartiger Wabenkörper zur Erzeugung spezieller Strömungsprofile verwendet werden, welche insbesondere dazu geeignet sind, eine Durchmischung des Abgases zu erzielen. Insbesondere kann der Wabenkörper für den Fall, dass er eine schräge Frontfläche und eine schräge Endfläche aufweist, mit wenigstens zwei Wabenkörpersegmenten ausgeführt sein, die wie hier beschrieben ausgeführt sind, wobei durch die Kombination wieder überall Kanäle mit gleicher Länge gebildet sind.

Auch erfindungsgemäß ist ein Wabenkörper, wenn die plane Frontfläche und die plane Endfläche im Wesentlichen parallel zueinander angeordnet sind. Ein derartiger Wabenkörper weist über den gesamten Querschnitt annähernd identische Kanallängen auf, wodurch der Strömungswiderstand des Wabenkörpers über den gesamten Querschnitt annähernd gleich ist und sich somit eine gleichmäßige Verteilung des Abgases im Wabenkörper einstellt und trotzdem gleichzeitig eine schräge Front- bzw. Endfläche vorgesehen ist. Ein derartiger Wabenkörper hat von der Seite her betrachtet (bzw. im Querschnitt) z. B. im Wesentlichen die Form eines Parallelogramms.

Gemäß einem weiteren Aspekt der Erfindung wird ein Verfahren zur Herstellung eines Wabenkörpers aufweisend zumindest die folgenden Schritte angegeben:
a) Bereitstellen eines Ursprungswabenkörpers mit einem Gehaüse, welcher zwei zu einer axialen Hauptrichtung des Ursprungswabenkörpers normale Stirnflächen aufweist;
b) Zerteilen des Ursprungswabenkörpers entlang einer Schräge in zwei Wabenkörpersegmente, wobei das Gehäuse mit geteilt wird, so dass Gehäuseteile entstehen
c) Anordnen der zwei Stirnflächen zueinander gegenüberliegend;
d) Verbinden der zwei Wabenkörpersegmente miteinander, wobei eine stoffschlüssige Verbindung der Gehäuseteile hergestellt wird.

Das Verfahren eignet sind insbesondere zur Herstellung der hier erfindungsgemäß beschriebenen Wabenkörper.

Im Rahmen des Schrittes a) kann ein bereits fertig gestellter Ursprungswabenkörper genutzt werden, der z. B. mit bekannten Fertigungsmethoden prozesssicher und mit hoher Präzision gefertigt wurde. Dabei werden insbesondere bereits mit einem Gehäuse gefügte Ursprungswabenkörper genutzt, also z. B. Ursprungswabenkörper, die mit metallischen Lagen eine Wabenstruktur mit einer Vielzahl von parallelen Kanälen bilden, die in ein Gehäuse eingefügt und gelötet sind. Im Schritt b) wird dann mindestes ein Ursprungswabenkörper zerteilt, so dass eine Mehrzahl von Wabenkörpersegmenten entstehen, wobei bevorzugt jedes dabei entstehende Teil ein Wabenkörpersegment ist, also insbesondere kein Verschnitt erzeugt wird (die Summer der Volumina der Wabenkörpersegmente entspricht also im Wesentlichen dem Volumen des Ursprungswabenkörpers). Beim Zerteilen wird dabei das Gehäuse und alle Kanäle geteilt. Dies kann durch entsprechende (z. B. mechanische und/oder thermische) Trennverfahren erfolgen, die z. B. auch unter Berücksichtigung des Materials des Ursprungswabenkörpers ausgewählt werden. Die so erzeugten Wabenkörpersegmente werden dann in ihrer Reihenfolge, wie sie in Schritt b) entstehen, in Schritt c) verändert, so dass die ursprünglich voneinander weg weisenden, den Ursprungswabenkörper begrenzenden normalen Stirnflächen nun zueinander gegenüberliegend angeordnet werden (" face-to-face"-Anordnung). Hierzu werden beispielsweise die beiden Wabenkörpersegmente, die die normalen Stirnflächen aufweisen, jeweils um 180° gedreht, so dass die axiale Hauptrichtung beider Wabenkörpersegmente nun entgegengesetzt verläuft. Für die Fertigstellung des Wabenkörpers werden die Wabenkörpersegmente nun noch direkt oder mittelbar miteinander gefügt (z. B. an den Gehäuseteilen geschweißt), damit ein stabiler Verbund wieder gegeben ist.

Es wurde bereits ausgeführt, dass aufgrund des klassischen Herstellungsverfahrens (Stapeln, Winden und/oder Wickeln) von Wabenkörpern aus Metalllagen die Herstellung von Wabenkörpern mit planen Stirnflächen problematisch ist. Aus diesem Grunde ist es vorteilhaft, die planen Fontflächen oder Endflächen derartiger Wabenkörper z. B. mit Hilfe eines schrägen Schnittes aus einem Ursprungswabenkörper herzustellen. Ist der Ursprungswabenkörper beispielsweise ein klassischer zylindrischer Wabenkörper mit zur axialen Hauptrichtung normalen (senkrechten) Stirnflächen, lassen sich so einfach zwei Wabenkörpersegmente herstellen. Es ist allerdings auch die Herstellung mehrerer Wabenkörpersegmente mit Hilfe von abwechselnd normalen und schrägen Schritten möglich. Die Herstellung eines erfindungsgemäßen Wabenkörpers aus zwei Wabenkörpersegmenten, welche aus einem gemeinsamen Ursprungswabenkörper mittels eines Schnittes (Tennvorgang, wie z. B. Sägen, Laserschneiden, etc.) hergestellt wurden, ist deswegen besonders vorteilhaft, weil bei derart hergestellten Wabenkörpersegmenten sichergestellt ist, dass die Kanäle der beiden Wabenkörpersegmente annähernd fluchtend zueinander angeordnet werden können, ohne dass besondere Rücksicht auf die Übereinstimmung der Kanalanordnung beim Stapeln, Winden und/oder Wickeln der Metalllagenstapel genommen werden muss.

Darüber hinaus wird hier auch ein Abgasleitungsabschnitt aufweisend einen erfindungsgemäßen Wabenkörper oder ein nach dem erfindungsgemäßen Verfahren hergestellter Wabenkörper angegeben, wobei am Abgasleitungsabschnitt wenigstens eine Abzweigung mit einer Erstreckungsrichtung vorgesehen ist, welche einer schrägen Frontfläche oder einer schrägen Endfläche des Wabenkörpers gegenüberliegend angeordnet und zu dieser schrägen Frontfläche oder Endfläche ausgerichtet ist. Bevorzugt ist dabei, dass die Erstreckungsrichtung (annähernd) senkrecht zur jeweiligen schrägen Frontfläche oder Endfläche ausgerichtet ist und insbesondere auch auf die jeweiligen schrägen Frontfläche oder Endfläche zentral auftrifft (z. B. im Bereich der axialen Hauptrichtung bzw. Mittelachse). Unter "senkrecht" werden hier Winkel zwischen Erstreckungsrichtung und Frontfläche oder Endfläche von 70° bis 90° und insbesondere von 80° bis 90° verstanden.

Ein derartiger Abgasleitungsabschnitt kann einfach in ein Abgassystem integriert werden. Die Abzweigung der Abgasleitung eignet sich insbesondere, um im Abgasleitungsabschnitt eine Sonde zur Überwachung des Abgases und/oder eine Zufuhr für beispielsweise ein Reduktionsmittel anzuordnen. Aufgrund der Ausrichtung der Erstreckungsrichtung des Abzweiges zu der schrägen Frontfläche und/oder Endfläche des Wabenkörpers kann das zugeführte Reduktionsmittel unmittelbar und gleichmäßig auf den Wabenkörper verteilt aufgebracht werden. Die schräge Anordnung ermöglicht die direkte Applikation von Reduktionsmittel auf eine Front- oder Endfläche eines Wabenkörpers, z. B. auch ohne eine separate Umlenkung.

Im Hinblick auf die Herstellung sei angemerkt, dass demnach ggf. noch ein Schritt e) angefügt werden kann, wobei der Wabenkörper zumindest an bzw. nahe einer schrägen Frontfläche oder Endfläche mit einem Abgasleitungsabschnitt fügetechnisch (z. B. mittels einer Schweißverbindung) verbunden wird. Werden die schräge Frontfläche und die schräge Endfläche des Wabenkörpers jeweils mit einem Abgasleitungsabschnitt verbunden, ist bevorzugt, dass die Abgasleitungsabschnitte aus einem Ursprungsabgasrohr gebildet sind, die (ähnlich Schritt b) beim Ursprungswabenkörper) mit einem schrägen Schnitt zerteilt werden. Die beiden (aufeinander abgestimmten) schrägen Schnittstellen der Wabenkörpersegmente und der Abgasleitungsabschnitte passen zueinander und können präzise zueinander gefügt werden.

Zudem wird auch ein Kraftfahrzeug mit einer Verbrennungskraftmaschine und einer Abgasanlage angegeben, aufweisend eine Abgasleitung mit einer Hauptströmungsrichtung (durch die Abgasleitung weg von der Verbrennungskraftmaschine) und zumindest einen erfindungsgemäßen Wabenkörper oder einen Wabenkörper, hergestellt mit dem erfindungsgemäßen Verfahren, oder zumindest einem erfindungsgemäßen Abgasleitungsabschnitt, wobei die Abgasanlage eine Zufuhr für Reduktionsmittel aufweist, welche in Hauptströmungsrichtung nach dem Wabenkörper angeordnet ist, so dass zugeführtes Reduktionsmittel auf eine schräge Frontfläche oder Endfläche des Wabenkörpers rückwärtig auftrifft, also bevorzugt zumindest teilweise entgegensetzt zur Hauptströmungsrichtung zugeführt wird.

Die Einspritzung von Reduktionsmittel auf eine derart angeordnete Abströmseite eines Wabenkörpers ist auch deswegen besonders vorteilhaft, weil so das Reduktionsmittel an den rückwärtigen Kanalwänden des Wabenkörpers zunächst haften bleibt und sich somit eine Verweilzeit ergibt, während der das Reduktionsmittel thermolytisch umgesetzt werden kann. Möglich ist es auch, die Kanalwände des Wabenkörpers im Bereich der Fläche, auf welche das Reduktionsmittel trifft, mit einer hydrolytisch wirkenden Beschichtung zu versehen, so dass das Reduktionsmittel auch hydrolytisch umgesetzt wird. Jedenfalls kann so auch einfach sichergestellt werden, dass das Reduktionsmittel (wie z. B. eine Harnstoff-WasserLösung) sich nicht an der kalten Abgasleitung absetzt und dort Ablagerungen bildet.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: einen erfindungsgemäßen Wabenkörper,
- Fig. 2:: einen zusammengesetzten erfindungsgemäßen Wabenkörper,
- Fig. 3.: einen zusammengesetzten erfindungsgemäßen Wabenkörper,
- Fig. 4:: ein Kraftfahrzeug mit einem Abgassystem aufweisend einen erfindungsgemäßen Wabenkörper,
- Fig. 5:: einen erfindungsgemäßen Abgasleitungsabschnitt, und
- Fig. 6:: den Querschnitt eines erfindungsgemäßen Wabenkörpers.

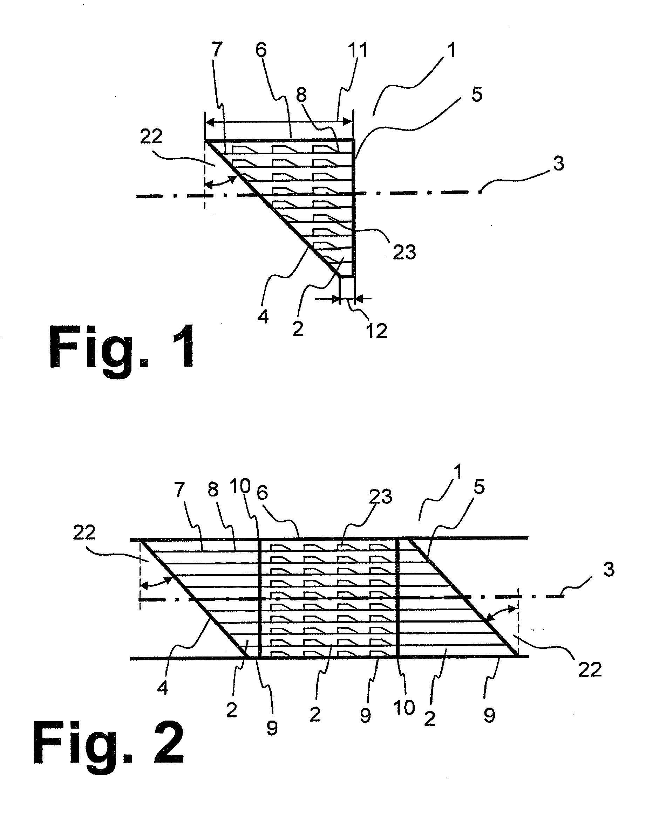

In den Fig. 1, 2 und 3 sind erfindungsgemäße Wabenkörper 1 dargestellt. Die Wabenkörper 1 weisen jeweils eine Frontfläche 4 und eine Endfläche 5 auf. Darüber hinaus besitzen sie jeweils eine Umfangsfläche 6 und eine zu dieser Umfangsfläche 6 parallele axiale Hauptrichtung 3. Die Umfangsfläche 6 ist bevorzugt zylindrisch. Es sind allerdings auch Umfangsflächen 6 in Form eines Rechteckes, eines Rechteckes mit abgerundeten Ecken oder ovale und/oder dreieckig mit abgerundeten Ecken geformte Umfangsflächen 6 möglich. Jeder Wabenkörper 1 weist darüber hinaus eine Vielzahl Kanäle 2 und Kanalwände 8 auf. Die Wabenkörper 1 sind hier z. B. aus Metalllagen 7 gebildet.

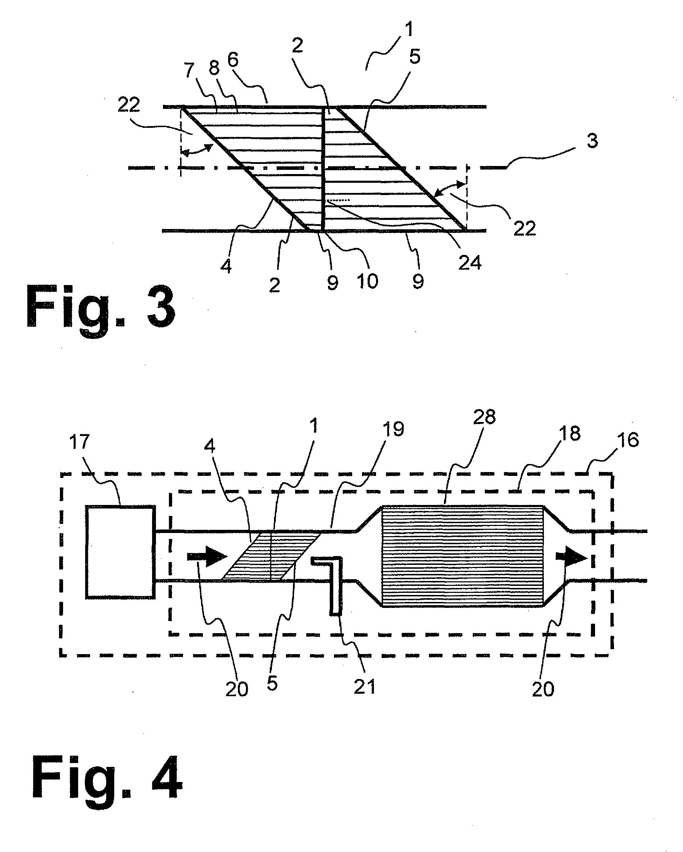

Bei dem in Fig. 1 dargestellten Wabenkörper 1 ist lediglich die Frontfläche 4 mit einem Winkel 22 schräg zur axialen Hauptrichtung 3 (hier auch Mittelachse) angeordnet. Bei den Wabenkörpern 1 in den Fig. 2 und 3 sind jeweils die Frontflächen 4 und die Endflächen 5 mit einem Winkel 22 schräg zur axialen Hauptrichtung 3 (hier auch Mittelachse) angeordnet. Der Winkel 22 muss für die Frontfläche 4 und die Endfläche 5 nicht zwangsläufig gleich sein.

In Fig. 1 ist zudem zu erkennen, dass der erfindungsgemäße Wabenkörper 1 entlang der axialen Hauptrichtung 3 eine längste axiale Ausdehnung 11 und eine kürzestes axiale Ausdehnung 12 besitzt. Als zusätzliche Besonderheit sind die Metalllagen 7 des Wabenkörpers 1 in Fig. 1 mit Umlenkstrukturen 23 versehen, welche Abgas innerhalb des Wabenkörpers 1 von einem Kanal 2 in einen benachbart angeordneten Kanal 2 umlenken. Typischerweise sind in der Nähe der Umlenkstrukturen 23 in den Metalllagen 7 auch Öffnungen der Metalllagen 7 vorgesehen, welche jedoch in der Figur 1 nicht mit dargestellt sind. Umlenkstrukturen 23 in erfindungsgemäßen Wabenkörpern 1 können beispielsweise auch so angeordnet werden, dass Abgase vom Bereich besonders kurzer axialer Kanallängen in der Nähe der kürzesten axialen Ausdehnung 12 in Richtung von Bereichen größerer axialer Kanallängen in der Nähe der längsten axialen Ausdehnung 11 umgelenkt werden. Wie sich auch im Zusammenhang mit den nachfolgenden Figuren ergibt, kann dieser Wabenkörper 1 auch wie ein Wabenkörpersegment 9 ausgeführt sein, so dass hier gleichermaßen auf diese Beschreibung verwiesen wird.

Die erfindungsgemäßen Wabenkörper 1 in den Fig. 2 und 3 sind jeweils aus mehreren Wabenkörpersegmenten 9 an zur axialen Hauptrichtung 3 normalen (senkrechten) Stirnflächen 10 zueinander angeordnet. In Fig. 2 weist eines der Wabenkörpersegmente 9 - nämlich eines, das keinen axialen Endabschnitt des Wabenkörpers bildet sondern mittig angeordnet ist - zwei normale Stirnflächen 10 auf. Dieses Wabenkörpersegment 9 zeichnet sich zusätzlich durch Umlenkstrukturen 23 aus. Insbesondere bei einer derartigen Anordnung ist es möglich, dass in Strömungsrichtung des Abgases (mittelbar) nachfolgend ein Wabenkörpersegment mit einer schrägen Frontfläche mit einer Hydrolysebeschichtung ausgeführt ist, ein mittleres Wabenkörpersegment mit zwei normalen Stirnflächen einen SCR-Katalysator bildet, und das Wabenkörpersegment, welches die Abströmfläche bildet, ein Oxidationskatalysator ist. Das mittlere Wabenkörpersegment mit zwei normalen Stirnflächen kann insbesondere auch ein Dreiwegekatalysator sein und/oder ggf. bereichsweise unterschiedliche Beschichtungen aufweisen. Bevorzugt ist, dass die Wabenkörpersegmente miteinander unmittelbar verbunden sind, z. B. indem die Gehäuseteile der Wabenkörpersegmente miteinander verschweißt sind.

In Fig. 3 ist zudem dargestellt, dass die Kanäle 2 der einzelnen Wabenkörpersegmente 9 auch mit einem Versatz 24 zueinander angeordnet sein können und so eine Verwirbelungs- und Durchmischungszone beim Übergang von einem Wabenkörpersegment in ein nächstes Wabenkörpersegment eingerichtet ist.

Fig. 4 zeigt ein erfindungsgemäßes Kraftfahrzeug 16 mit einer Verbrennungskraftmaschine 17 und einer Abgasanlage 18, welches einen erfindungsgemäßen Wabenkörper 1 in einer Abgasleitung 19 aufweist. Das in der Verbrennungskraftmaschine 17 erzeugte Abgas strömt entlang der Abgasleitung 19 von der Verbrennungskraftmaschine 17 weg in einer Strömungsrichtung 20. Entlang der Strömungsrichtung 20 trifft Abgas zunächst auf die Frontfläche 4 eines erfindungsgemäßen Wabenkörpers 1. Anschließend verlässt es den erfindungsgemäßen Wabenkörper 1 über die Endfläche 5, welche von einer Zufuhr 21 für Reduktionsmittel mit Reduktionsmittel benetzt werden kann. Diese Zufuhr 21 weist eine Umlenkung auf, die einen Strömungswiderstand für Abgas darstellt. Anschließend passiert das Abgas einen katalytischen Konverter 28, der typischerweise ein SCR-Katalysator sein kann.

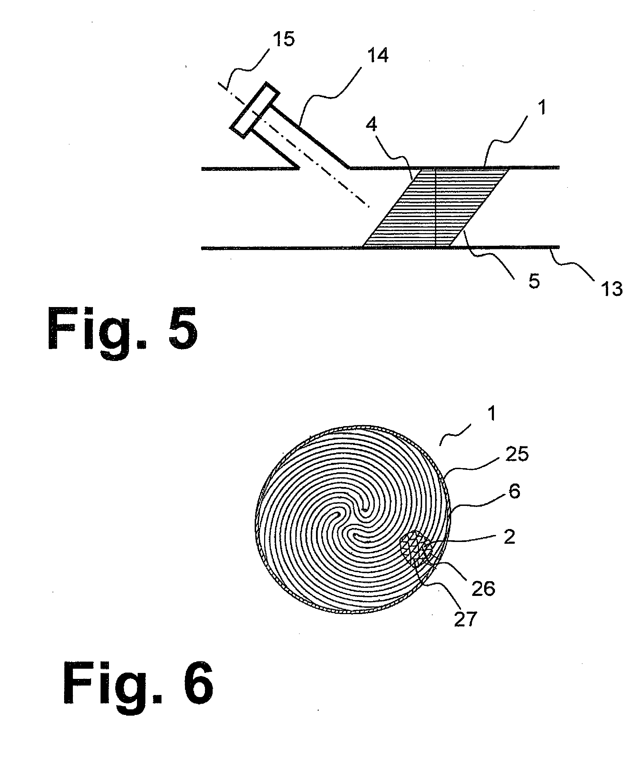

In Fig. 5 ist ein Abgasleitungsabschnitt 13 mit einem Wabenkörper 1 dargestellt. Dieser weist eine Abzweigung 14 mit einer Erstreckungsrichtung 15 auf, welche normal (senkrecht) zur Frontfläche 4 des erfindungsgemäßen Wabenkörpers 1 angeordnet ist. Eine Zufuhr 21 für Reduktionsmittel, die in dieser Abzweigung 14 angeordnet wird, kann das Reduktionsmittel frontal auf eine Frontfläche 4 applizieren, ohne dass sie einen Strömungswiderstand in der Abgasleitung 19 darstellt, weil eine Umlenkung der Zufuhr 21 hier nicht erforderlich ist. Selbstverständlich ist strömungstechnisch auch eine entgegengesetzte Anordnung möglich, bei der also eine Zufuhr von Reduktionsmittel auf die Endfläche 5 vorgenommen wird.

In Fig. 6 ist ein Querschnitt durch einen Wabenkörper 1 dargestellt. Hier ist insbesondere zu erkennen, dass der Wabenkörper 1 aus mehreren Stapeln aus glatten Blechlagen 26 und gewellten Blechlagen 27, welche die Kanäle 2 bilden, besteht, die gegeneinander verdreht im Gehäuse 25 angeordnet sind.

Die Erfindung betrifft demnach einen Wabenkörper für ein Abgasreinigungssystem. Derartige Wabenkörper können beispielsweise als Trägerkörper für katalytisch wirkende Beschichtungen oder als Filter, Adsorber oder Mischer im Abgassystem einer Verbrennungskraftmaschine eingesetzt werden. Der erfindungsgemäße Wabenkörper ist ein Wabenkörper mit Kanälen, einer axialen Hauptrichtung, einer planen Frontfläche, einer planen Endfläche und einer Umfangsfläche, welche parallel zur axialen Hauptrichtung angeordnet ist, wobei zumindest die Frontfläche und/oder die Endfläche schräg zur axialen Hauptrichtung stehen. Derartige Wabenkörper sind insbesondere vorteilhaft, um Reduktionsmittel auf die schräge End- oder Frontfläche zu applizieren.

### Bezugszeichenliste

- 1: Wabenkörper
- 2: Kanäle
- 3: axiale Hauptrichtung
- 4: Frontfläche
- 5: Endfläche
- 6: Umfangsfläche
- 7: Metalllage
- 8: Kanalwände
- 9: Wabenkörpersegment
- 10: normale Stirnfläche
- 11: längste axiale Ausdehnung
- 12: kürzeste axiale Ausdehnung
- 13: Abgasleitungsabschnitt
- 14: Abzweigung
- 15: Erstreckungsrichtung
- 16: Kraftfahrzeug
- 17: Verbrennungskraftmaschine
- 18: Abgasanlage
- 19: Abgasleitung
- 20: Hauptströmungsrichtung
- 21: Zufuhr
- 22: Winkel
- 23: Umlenkstrukturen
- 24: Versatz
- 25: Gehäuse
- 26: glatte Blechlage
- 27: gewellte Blechlage
- 28: katalytischer Konverter

## Patentansprüche

1. Wabenkörper (1) mit Gehäuse, mit Kanälen (2), einer axialen Hauptrichtung (3), einer planen Frontfläche (4), einer planen Endfläche (5) und einer Umfangsfläche (6), welche parallel zur axialen Hauptrichtung (3) angeordnet ist, wobei zumindest die Frontfläche (4) oder die Endfläche (5) schräg zur axialen Hauptrichtung (3) angeordnet ist, **dadurch gekennzeichnet, daß** der Wabenkörper (1) mit mindestens zwei Wabenkörpersegmenten (9) ausgeführt ist, die jeweils mindestens eine plane und zur axialen Hauptrichtung (3) normale Stirnfläche (10) aufweisen und diese normalen Stirnflächen (10) der mindestens zwei Wabenkörpersegmente (9) zueinander gegenüberliegend angeordnet sind. wobei die beiden Wabenkörpersegmente (9) jeweils ein Gehäuseteil aufweisen und die Gehäuseteile mit einer stoffschlüssigen Verbindung verbunden sind.

2. Wabenkörper (1) mit Gehäuse nach Patentanspruch 1, wobei der Wabenkörper (1) mindestens eine zumindest teilweise gewellte Metalllage (7) aufweist, welche die Kanäle (2) begrenzende Kanalwände (8) bildet.

3. Wabenkörper (1) mit Gehäuse nach einem der vorhergehenden Patentansprüche, wobei die mindestens zwei Wabenkörpersegmente (9) jeweils Kanäle (2) und Kanalwände (8) aufweisen und die Kanäle (2) der mindestens zwei Wabenkörpersegmente (9) entlang der axialen Hauptrichtung (3) fluchtend zueinander angeordnet sind.

4. Wabenkörper (1) mit Gehäuse nach einem der vorhergehenden Patentansprüche, wobei der Wabenkörper (1) parallel zur axialen Hauptrichtung eine längste axiale Ausdehnung (11) und eine kürzeste axiale Ausdehnung (12) aufweist, wobei die längste axiale Ausdehnung (11) wesentlich länger als die kürzeste axiale Ausdehnung (12) ist.

5. Wabenkörper (1) mit Gehäuse nach einem der Patentansprüche 1 bis 4, wobei die plane Frontfläche (4) und die plane Endfläche (5) im Wesentlichen parallel zueinander angeordnet sind.

6. Verfahren zur Herstellung eines Wabenkörpers (1) mit Gehäuse aufweisend zumindest die folgenden Schritte:
a) Bereitstellen eines Ursprungswabenkörpers mit einem Gehäuse (25). welcher zwei zu einer axialen Hauptrichtung des Ursprungswabenkörpers normale Stirnflächen (10) aufweist;
b) Zerteilen des Ursprungswabenkörpers entlang einer Schräge in zwei Wabenkörpersegmente (9), wobei das Gehäuse (25) mit geteilt wird, so dass Gehäuseteile entstehen;
c) Anordnen der zwei Stirnflächen (10) zueinander gegenüberliegend;
d) Verbinden der zwei Wabenkörpersegmente (9) miteinander, wobei eine stoffschlüssige Verbindung der Gehäuseteile hergestellt wird.

7. Abgasleitungsabschnitt (13) aufweisend einen Wabenkörper (1) mit Gehäuse nach einem der Patentansprüche 1 bis 5 oder einen Wabenköper (1) mit Gehäuse hergestellt mit einem Verfahren gemäß Patentanspruch 6, wobei am Abgasleitungsabschnitt (13) wenigstens eine Abzweigung (14) mit einer Erstreckungsrichtung (15) vorgesehen ist, welche einer schrägen Frontfläche (4) oder einer schrägen Endfläche (5) des Wabenkörpers (1) gegenüberliegend angeordnet und zu dieser jeweiligen schrägen Frontfläche (4) oder Endfläche (5) ausgerichtet ist.

8. Kraftfahrzeug (16) mit einer Verbrennungskraftmaschine (17) und einer Abgasanlage (18) aufweisend eine Abgasleitung (19) mit einer Hauptströmungsrichtung (20) und
- zumindest einen Wabenkörper (1) mit Gehäuse nach einem der Patentansprüche 1 bis 5, oder
- einen Wabenkörper mit Gehäuse hergestellt mit einem Verfahren gemäß Patentanspruch 6, oder
- zumindest einem Abgasleitungsabschnitt (13) gemäß Patentanspruch 7,
wobei die Abgasanlage eine Zufuhr (21) für Reduktionsmittel aufweist, welche in Hauptströmungsrichtung (20) nach dem Wabenkörper (1) angeordnet ist, so dass zugeführtes Reduktionsmittel auf eine schräge Frontfläche (4) oder Endfläche (5) des Wabenkörpers (1) rückwärtig auftrifft.

## Claims

1. Honeycomb body (1) having a housing, having channels (2), having an axial main direction (3), having a planar front surface (4), having a planar end surface (5) and having a circumferential surface (6) which is arranged parallel to the axial main direction (3), wherein at least the front surface (4) or the end surface (5) is arranged obliquely with respect to the axial main direction (3), **characterized in that** the honeycomb body (1) is formed with at least two honeycomb body segments (9) which have in each case at least one planar and normal face (10) which is normal to the axial main direction (3), and said normal faces (10) of the at least two honeycomb body segments (9) are arranged facing one another, wherein the two honeycomb body segments (9) have in each case a housing part and the housing parts are materially connected.

2. Honeycomb body (1) having a housing according to claim 1, wherein the honeycomb body (1) has at least one at least partially corrugated metal layer (7) which forms channel walls (8) which delimit the channels (2).

3. Honeycomb body (1) having a housing according to one of the preceding claims, wherein the at least two honeycomb body segments (9) each have channels (2) and channel walls (8), and the channels (2) of the at least two honeycomb body segments (9) are arranged flush with one another along the axial main direction (3).

4. Honeycomb body (1) having a housing according to one of the preceding claims, wherein the honeycomb body (1) has, parallel to the axial main direction, a longest axial extent (11) and a shortest axial extent (12), wherein the longest axial extent (11) is significantly longer than the shortest axial extent (12).

5. Honeycomb body (1) having a housing according to one of claims 1 to 4, wherein the planar front surface (4) and the planar end surface (5) are arranged substantially parallel to one another.

6. Method for producing a honeycomb body (1) having a housing, comprising at least the following steps:
a) providing an initial honeycomb body having a housing (25) which initial honeycomb body has two faces (10) normal to an axial main direction of the initial honeycomb body;
b) partitioning the initial honeycomb body along an oblique line to form two honeycomb body segments (9), wherein the housing (25) is also split so that housing parts are created;
c) arranging the two faces (10) so as to face one another;
d) connecting the two honeycomb body segments (9) to one another, wherein the housing parts are materially connected.

7. Exhaust line section (13) having a honeycomb body (1) having a housing according to one of claims 1 to 5 or a honeycomb body (1) having a housing produced by a method according to claim 6, wherein on the exhaust line section (13) there is provided at least one branch (14) with a direction of extent (15), which branch is situated facing an oblique front surface (4) or an oblique end surface (5) of the honeycomb body (1) and is directed toward said respective oblique front surface (4) or end surface (5).

8. Motor vehicle (16) having an internal combustion engine (17) and having an exhaust system (18) which has an exhaust line (19) with a main flow direction (20) and which has
- at least one honeycomb body (1) having a housing according to one of claims 1 to 5, or
- a honeycomb body having a housing produced by a method according to claim 6, or
- at least one exhaust line section (13) according to claim 7, wherein the exhaust system has a supply (21) for reducing agent, which supply is arranged downstream of the honeycomb body (1) in the main flow direction (20), such that reducing agent supplied impinges in a backward direction against an oblique front surface (4) or end surface (5) of the honeycomb body (1).

## Revendications

1. Corps en nid d'abeilles (1) comprenant un boîtier, comprenant des canaux (2), une direction principale axiale (3), une face frontale plane (4), une face d'extrémité plane (5) et une face périphérique (6) qui est disposée parallèlement à la direction principale axiale (3), au moins la face frontale (4) ou la face d'extrémité (5) étant disposée obliquement par rapport à la direction principale axiale (3), **caractérisé en ce que** le corps en nid d'abeilles (1) est réalisé avec au moins deux segments de corps en nid d'abeilles (9), qui présentent à chaque fois au moins une face frontale (10) plane et perpendiculaire à la direction principale axiale (3) et ces faces frontales (10) perpendiculaires des au moins deux segments de corps en nid d'abeilles (9) étant disposées en regard l'une de l'autre, les deux segments de corps en nid d'abeilles (9) présentant à chaque fois une partie de boîtier et les parties de boîtier étant connectées par une connexion par engagement par liaison de matière.

2. Corps en nid d'abeilles (1) comprenant un boîtier selon la revendication 1, le corps en nid d'abeilles (1) présentant au moins une couche métallique au moins en partie ondulée (7) qui forme des parois de canal (8) limitant les canaux (2).

3. Corps en nid d'abeilles (1) comprenant un boîtier selon l'une quelconque des revendications précédentes, dans lequel les au moins deux segments de corps en nid d'abeilles (9) présentent à chaque fois des canaux (2) et des parois de canal (8) et les canaux (2) des au moins deux segments de corps en nid d'abeilles (9) sont disposés en affleurement les uns avec les autres le long de la direction principale axiale (3).

4. Corps en nid d'abeilles (1) comprenant un boîtier selon l'une quelconque des revendications précédentes, le corps en nid d'abeilles (1) présentant, parallèlement à la direction principale axiale, une étendue axiale la plus longue (11) et une étendue axiale la plus courte (12), l'étendue axiale la plus longue (11) étant considérablement plus longue que l'étendue axiale la plus courte (12).

5. Corps en nid d'abeilles (1) comprenant un boîtier selon l'une quelconque des revendications 1 à 4, dans lequel la face frontale plane (4) et la face d'extrémité plane (5) sont disposées essentiellement parallèlement l'une à l'autre.

6. Procédé de fabrication d'un corps en nid d'abeilles (1) comprenant un boîtier, présentant au moins les étapes suivantes :
a) fourniture d'un corps en nid d'abeilles initial comprenant un boîtier (25), qui présente deux faces frontales (10) perpendiculaires à une direction principale axiale du corps en nid d'abeilles initial ;
b) division du corps en nid d'abeilles initial le long d'une droite oblique en deux segments de corps en nid d'abeilles (9), le boîtier (25) étant également divisé de sorte que l'on obtienne des parties de boîtier ;
c) agencement des deux faces frontales (10) en regard l'une de l'autre;
d) assemblage des deux segments de corps en nid d'abeilles (9) l'un à l'autre, en créant une connexion par engagement par liaison de matière des parties de boîtier.

7. Section de conduite de gaz d'échappement (13) présentant un corps en nid d'abeilles (1) comprenant un boîtier selon l'une quelconque des revendications 1 à 5 ou un corps en nid d'abeilles (1) avec un boîtier fabriqué avec un procédé selon la revendication 6, au moins un branchement (14) étant prévu au niveau de la section de conduite de gaz d'échappement (13) avec une direction d'étendue (15) qui est disposée en regard d'une face frontale oblique (4) ou d'une face d'extrémité oblique (5) du corps en nid d'abeilles (1) et qui est orientée vers cette face frontale (4) ou face d'extrémité (5) oblique respective.

8. Véhicule automobile (16) comprenant un moteur à combustion interne (17) et une installation de gaz d'échappement (18) présentant une conduite de gaz d'échappement (19) avec une direction d'écoulement principale (20) et
- au moins un corps en nid d'abeilles (1) comprenant un boîtier selon l'une quelconque des revendications 1 à 5, ou
- un corps en nid d'abeilles comprenant un boîtier fabriqué avec un procédé selon la revendication 6, ou
- au moins une section de conduite de gaz d'échappement (13) selon la revendication 7,
l'installation de gaz d'échappement présentant une alimentation (21) en agent réducteur, laquelle est disposée dans la direction d'écoulement principale (20) après le corps en nid d'abeilles (1), de telle sorte que l'agent réducteur acheminé arrive vers l'arrière sur une face frontale (4) ou face d'extrémité (5) oblique du corps en nid d'abeilles (1).
